(19) Europäisches Patentamt
European Patent Office
Office européen des brevets

(11) **EP 2 607 621 A1**

(12) **EUROPEAN PATENT APPLICATION**

(43) Date of publication:
**26.06.2013 Bulletin 2013/26**

(51) Int Cl.:
*E21B 47/09* (2012.01)     *G01B 7/02* (2006.01)

(21) Application number: **11195021.8**

(22) Date of filing: **21.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Welltec A/S**
**3450 Allerød (DK)**

(72) Inventor: **Hallundbæk, Jørgen**
**3230 Græsted (DK)**

(74) Representative: **Hoffmann Dragsted A/S**
**Rådhuspladsen 16**
**1550 Copenhagen V (DK)**

(54) **Downhole mapping system**

(57)     The present invention relates to a downhole mapping system for identifying completion components in a casing in a completion. The downhole mapping system comprises a magnetic sensor tool having a longitudinal tool axis and comprising a detecting unit. Furthermore, the present invention relates to a completion diagram provided by the downhole mapping system according to the invention and to a data carrier comprising the completion diagram according the invention. Finally, the present invention relates to a method for identifying completion components downhole.

Fig. 1

EP 2 607 621 A1

## Description

### Field of the invention

The present invention relates to a downhole mapping system for identifying completion components in a casing in a completion. Furthermore, the present invention relates to a completion diagram provided by the downhole mapping system according to the invention and to a data carrier comprising the completion diagram according the invention. Finally, the present invention relates to a method for identifying completion components downhole.

### Background art

When performing operations downhole in completions, a downhole tool having one or more operational tools is inserted into the completion. The downhole tool is then moved down in the completion until it reaches the area within which it has to perform its operation.

Since for many completions, especially older completions, specific information on the position of different completion components is not available, it is difficult to perform operations downhole, as it is difficult to identify any completion components downhole which are to be activated, maintained or serviced. This makes downhole operations cumbersome and time-consuming.

### Summary of the invention

It is an object of the present invention to wholly or partly overcome the above disadvantages and drawbacks of the prior art. More specifically, it is an object to provide a downhole mapping system which can identify completion components present in a casing of a completion.

The above objects, together with numerous other objects, advantages, and features, which will become evident from the below description, are accomplished by a solution in accordance with the present invention by a downhole mapping system for identifying completion components in a casing in a completion, comprising:

- a magnetic sensor tool having a longitudinal tool axis and comprising:

  - a detecting unit comprising:

    - a first magnet for generating a magnetic field, and
    - a first sensor arranged in a first plane and at a first distance from the first magnet, for detecting changes in the magnetic field, the sensor detecting changes in the magnitude and/or direction of the magnetic field producing measured data of a profile of the casing,

wherein the downhole mapping system further comprises:

- a reference database comprising magnetic reference data of completion components, and
- a processor comparing a set of the measured data with reference data from the database for identifying a substantially matching set of data representing a completion component stored in the reference database.

The tool may further comprise a second sensor arranged in the first plane and at a second distance from the first sensor along the longitudinal tool axis, also for detecting changes in the magnetic field.

When the tool has two sensors positioned at a distance from each other, the measurements of the first sensor can be compared with the measurements of the second sensor, which leads to a more precise estimate of a matching component.

Moreover, the magnet may have a magnetic field source axis substantially transverse to the longitudinal tool axis.

In one embodiment, the tool may be powered by a battery.

In another embodiment, the tool may be powered through a wireline.

Also, the downhole mapping system may further comprise an operational tool.

In addition, the completion component may at least partly be made of metal and may at least have a thickness along its extension which is different from a thickness of the casing.

Furthermore, the completion component may have varying thicknesses or configurations along its extension.

The completion component may be a collar of a casing, an inflow valve, a sliding sleeve, a rotational sleeve, a ball valve, a nipple, a screen, an annular barrier, a sensor, etc.

Moreover, the operational tool may be a stroker tool, a key tool, a logging tool, a drilling tool, a milling tool, etc.

Additionally, the operational tool may further comprise a driving unit, such as a downhole tractor, for propelling the system forward downhole.

The downhole mapping system as described above may further comprise a communication unit sending information of any matching completion components and a position of the matching completion components.

Also, said downhole mapping system may further comprise a component scanning unit for scanning the inner surface for identifying a component and storing the data representing the component in the database, wherein the scanning unit uses laser for scanning the component.

In an embodiment, the reference database may be arranged in the magnetic sensor tool or at subterrain or uphole.

Further, the processor may be arranged in the magnetic sensor tool or at subterrain.

The downhole mapping system as described above may further comprise a completion map unit of identified completion components of the completion.

Said completion map unit may be arranged in a first part of the casing nearest to a well head, in the magnetic sensor tool or in the well head, and the completion map unit may comprise data of the component present in the completion.

Furthermore, the magnetic sensor tool may comprise a communication unit sending information of any matching completion components and a position of the matching completion components to the completion map unit.

In addition, the magnetic sensor tool or another operational tool may comprise a reader for reading information from the completion map unit regarding the completion components and a position of the completion components present in the completion.

The present invention also relates to a completion diagram provided by the downhole mapping system as described above.

Also, the present invention relates to a data carrier comprising the completion diagram as described above.

Said data carrier may be a CD-ROM, a DVD, a Blu-ray, a memory disk or card, a processor, a barcode, or a hard disk.

Moreover, the completion map unit may be the data carrier.

The magnetic sensor tool may further comprise a second magnet, the first sensor being positioned in a first angle in relation to a longitudinal extension of the first magnet, and the second sensor having the first distance and angle in relation to a longitudinal extension of the second magnet.

In one embodiment, the sensors may be positioned at the same distance from the magnet.

The sensors may be anisotropic magnetoresistive sensors. By using anisotropic magnetoresistive sensors, the measurements of the sensors are independent of the velocity of the tool.

The magnetic sensor tool may further comprise a second magnet, the second sensor being arranged in a position in relation to the second magnet, which position is the same as the position in which the first sensor is arranged in relation to the first magnet, as if the first sensor and magnet had been displaced in parallel, and the magnet may be arranged in the same first plane as the first and second sensors. By arranging the sensors in the same plane, a more precise identification of a matching component may be obtained.

Moreover, the first distance may be equal to the second distance.

Furthermore, the first and second sensors may be arranged on one side of the magnet and a plurality of sensors may be arranged on the other side in the first plane.

The magnet may be arranged on one side of a plate, and an additional magnet may be arranged on the other side of the plate so that two repelling poles of the magnets are facing one another. The plate may be made of a non-conductive or non-magnetic material, such as porcelain, ceramics, mica, glass, plastics, or a combination thereof.

The tool may comprise a plurality of magnets, each of which is arranged opposite a sensor so that the first magnet is arranged opposite the first sensor, and the second magnet is arranged opposite the second sensor.

Furthermore, the at least one magnet may be a permanent magnet or an electromagnet.

Each sensor may measure the magnitude and/or direction of the magnetic field or the field vector, i.e. the strength and direction of the field.

The tool may have a cylindrical shape with a wall, and the detecting unit may be arranged inside the tool and surrounded by the wall.

The magnet may have a rectangular shape or a cylindrical shape.

The distance between two sensors may be between 5 and 150 mm, preferably between 5 and 100 mm, more preferably between 10 and 50 mm, and even more preferably between 10 and 30 mm.

The present invention furthermore relates to a method for identifying completion components downhole comprising the steps of:

- moving the magnetic sensor tool along a casing,
- measuring a magnetic data of the casing, and
- comparing the measured magnetic data with reference data in the reference database for identifying a match between the measured data and the reference data.

Said step of comparing may comprise a step of determining a best match where identification of a match is unobtainable.

This method for identifying completion components downhole may further comprise the step of storing the measured data of the match.

Also, the step of comparing may occur downhole or uphole.

The measured data may be stored with an identification tag of the known component.

In said method, a component may be identified by a component scanning unit scanning an inner surface of the casing, so that the component becomes a known component.

The component scanned by the scanning unit may be stored in the reference database.

Furthermore, the present invention also relates to a method of mapping a completion which may comprise the steps of:

- moving the magnetic sensor tool along a casing,
- measuring a magnetic data of the casing, and
- comparing the measured magnetic data with reference data in the reference database for identifying a match between the measured data and the reference data.

Moreover, the method may comprise the following steps for determining a position of the tool based on the measurements obtained from the magnetic sensor tool:

- measuring the magnitude and/or direction of a magnetic field by means of the first sensor several times over a time period,
- measuring the magnitude and/or direction of the magnetic field by means of the second sensor, and
- comparing the measurements from the first sensor with the measurements from the second sensor in order to calculate a velocity of the tool.

According to another aspect of the present invention a method of enhancing and improving a reference database comprises the steps of:

- moving the magnetic sensor tool past a known component for measuring a set of magnetic data representing the known component, and
- storing the set of measured data with an identification tag of the known component.

The step of measuring a known component may occur downhole or uphole.

**Brief description of the drawings**

The invention and its many advantages will be described in more detail below with reference to the accompanying schematic drawings, which for the purpose of illustration show some non-limiting embodiments and in which

Fig. 1 shows schematically a downhole mapping system according to the invention,

Fig. 2 shows a part of the downhole mapping system with a magnetic sensor tool,

Fig. 3 shows another embodiment of the magnetic sensor tool,

Fig. 4 shows yet another embodiment of the magnetic sensor tool,

Fig. 5 shows yet another embodiment of the magnetic sensor tool,

Fig. 6 shows yet another embodiment of the magnetic sensor tool,

Fig. 7 shows a cross-sectional view of a magnet,

Fig. 8 shows a cross-sectional view of the magnetic sensor tool of the downhole mapping system,

Fig. 9 shows a cross-sectional view of the tip of an embodiment of the downhole mapping system,

Fig. 10 shows the downhole mapping system in connection with a driving unit,

Fig. 11 shows a graph of measurements obtained while the magnetic sensor tool of the downhole mapping system passes a casing collar and a completion component,

Fig. 12 shows a graph of measurements from two sensors,

Fig. 13 shows another embodiment of the downhole mapping system,

Fig. 14 shows a well head of a completion with a completion map unit,

Fig. 15 shows a part of a downhole system having a reader capable of reading data from a completion map unit,

Fig. 16 shows a completion diagram, and

Fig. 17 is a flow chart over the process of mapping completion components downhole.

All the figures are highly schematic and not necessarily to scale, and they show only those parts which are necessary in order to elucidate the invention, other parts being omitted or merely suggested.

**Detailed description of the invention**

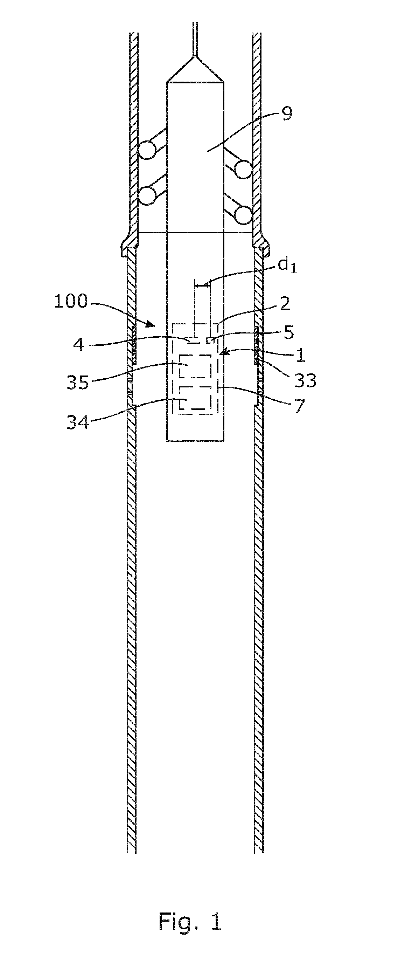

Fig. 1 shows a downhole mapping system 100 for identifying completion components 33 in a casing in a completion. The downhole mapping system 100 comprises a magnetic sensor tool 1 having a longitudinal tool axis 31 and a detecting unit 2. The detecting unit 2 comprises a first magnet 4 for generating a magnetic field, and a first sensor 5 arranged in a first plane 7 and at a first distance $d_1$ from the first magnet, for detecting changes in the magnetic field. The first sensor detects changes in the magnitude and/or direction of the magnetic field producing measured data of a profile of the casing. The profile of the casing changes when the magnetic sensor tool 1 passes a completion component 33 connected with the casing or forming part of the casing, such as a sliding sleeve. The downhole mapping system 100 further comprises a reference database 34 comprising magnetic reference data of known completion components, and a processor 35 comparing a set of measured data with reference data from the database for identifying a substantially matching set of data representing a known completion component stored in the reference database 34.

Thus, the downhole mapping system 100 can be used to identify a completion component such as if a component is a sliding sleeve, a rotational sleeve or another kind of valve. In order to close the valve, the valve has to be identified to mount the right key for gripping into a corresponding groove in the valve. Furthermore, it is very important to identify whether the sleeve is sliding in the axial direction or rotates in order to mount the key on the right tool capable of rotating the key if it is a rotational sleeve or slide the key along the axial direction if the sleeve is a sliding sleeve.

The downhole mapping system 100 may also be used to map a whole completion, so as to both verify that a component appearing in the completion diagram is actually mounted in the completion and to identify components not appearing in the completion diagram. The magnetic sensor tool 1 is moved along the casing in the completion measuring the casing profile, and the measured data is compared, section by section, with data of known completion components in the database.

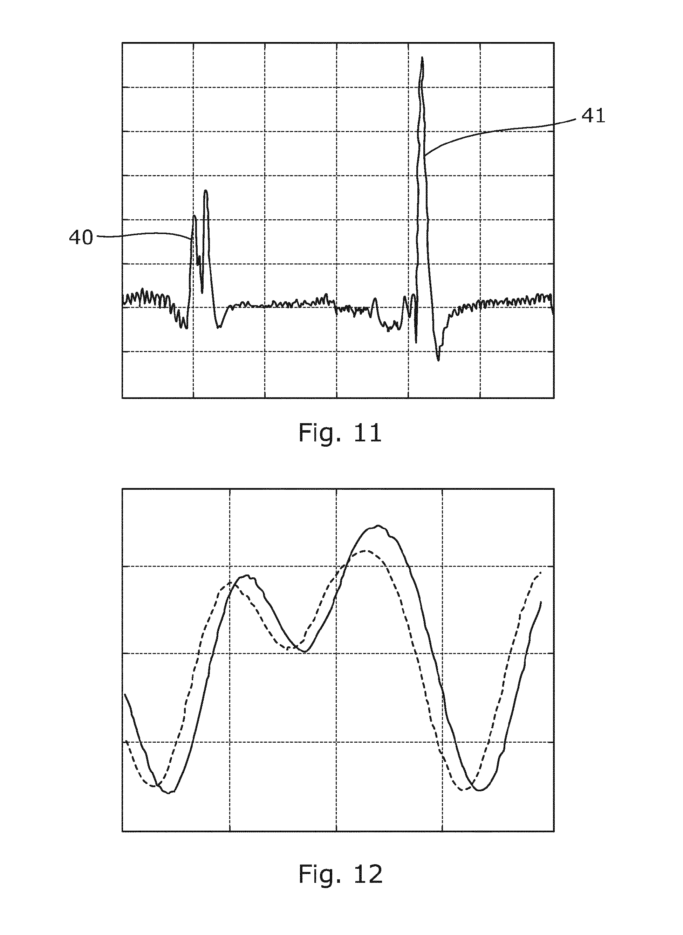

In Fig. 11, a graph of the measurements from one sensor is shown. As can be seen, the graph has two peaks, one peak 40 representing the point where the sensor passes a casing collar and second peak 41 where the tool passes some completion component 33. The set of data represented by the graph is compared with the reference database 34 for identifying a set of data of a known completion component stored in the reference database having substantially the same set of data as the measured data represented by the second peak 41. When a matching, known component has been identified, the component 33 in the casing may be labelled with an identification tag having the type of component and position, and the information is sent to a completion map unit 50 via a communication unit 51. When a matching, known component has been identified, data of the type of component and position identified may be stored in the completion map unit in the tool.

The completion component 33 is at least partly made of metal and at least has a thickness along its extension which is different from a thickness of the casing, whereby it is possible to measure a set of data of the component with the sensor tool 1. Furthermore, the completion component 33 has varying thicknesses or configurations along its extension, which also facilitates the identification of the measured set of data of the component.

The completion component 33 may for instance be a collar of a casing, an inflow valve, a sliding sleeve, a rotational sleeve, a ball valve, a nipple, a screen, an annular barrier, a sensor, etc.

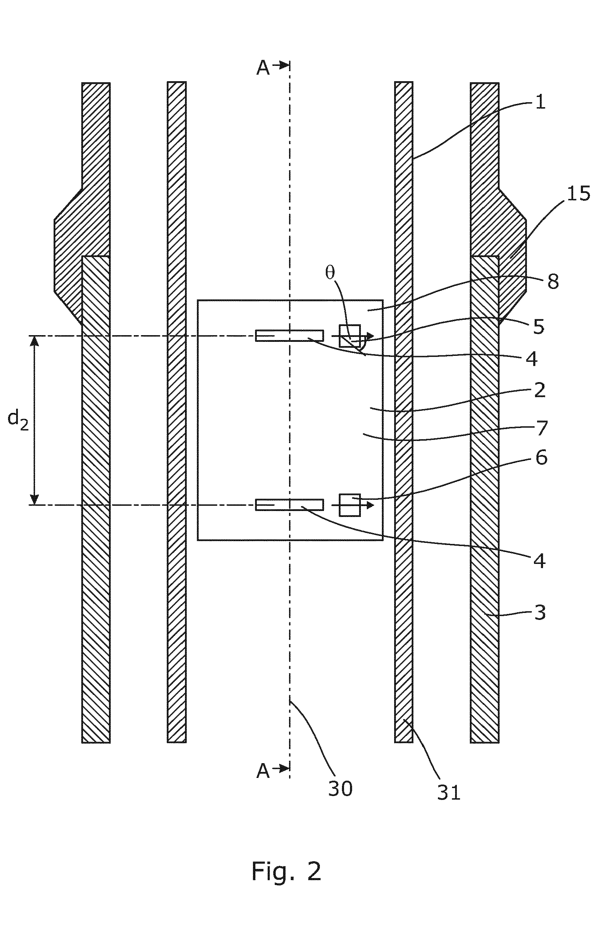

Fig. 2 shows a magnetic sensor tool 1 comprising a magnet 4 and two sensors 5, 6. These sensors 5, 6 are positioned so that one sensor is positioned opposite the magnet 4. The sensors 5, 6 are arranged with an axial distance $d_2$ from each other and in the same plane 7 as on a plate 8. The sensors 5, 6 are arranged at a first distance $d_1$ to the magnet 4 which is positioned on the same plate 8. In Fig. 2, the plate 8 is a circuit board.

The magnetic sensor tool 1 has a substantially cylindrical shape, and the magnets are arranged in the centre of the tool crossing a centre axis 30 of the tool, extending along the length of the tool. The plate 8 is fastened to the wall 31 of the tool 1. When the tool 1 moves down the casing 3, the magnetic field changes depending on the surroundings, and the sensors 5, 6 detect a direction θ of the magnetic field lines or changes in a magnitude of the magnetic field when the tool moves. By performing substantially continuous measurements of the direction and/or magnitude, small variations are measured while the tool 1 moves along the casing 3 between casing collars, completion components or just the casing wall. The sensors are also capable of detecting if no changes occur in the magnetic field, i.e. if the thickness of the casing is unchanged along the measured distance or if the tool has stopped.

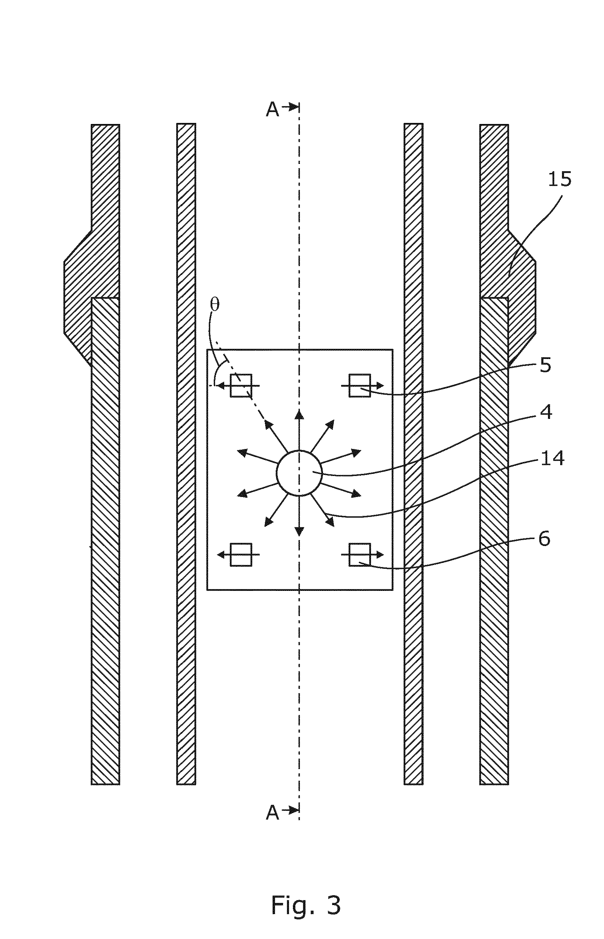

The detecting unit 2 of Fig. 3 has four sensors 5, 6, and only two of the sensors are arranged on the same side of the magnet 4. The closer the two sensors 5, 6 are arranged in the longitudinal direction of the tool, the faster the processing of the measurements.

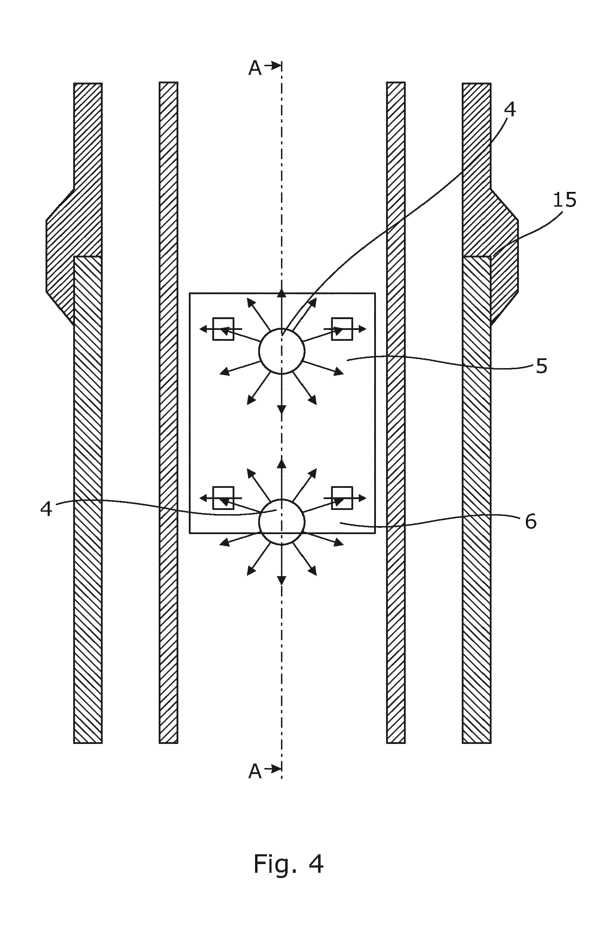

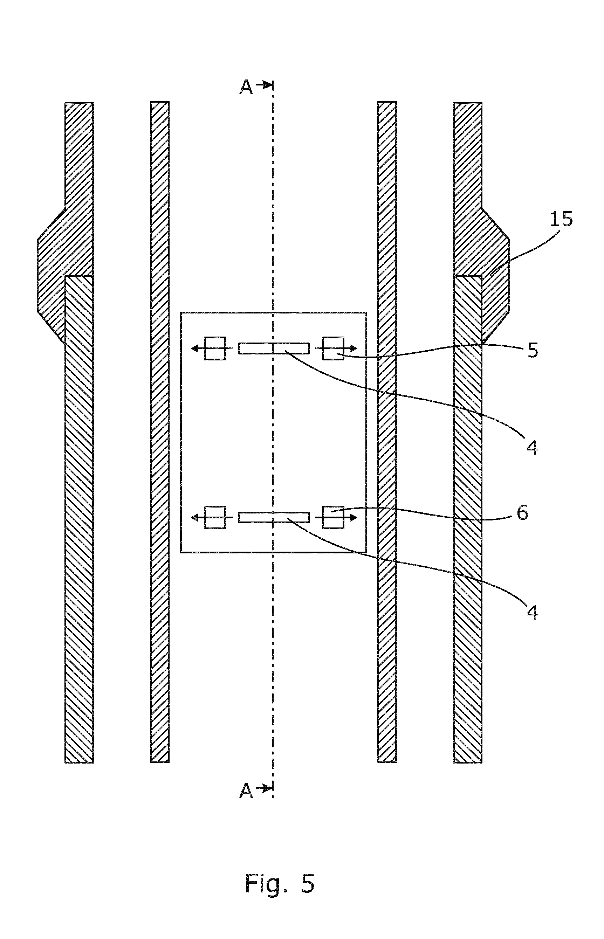

As it appears from Figs. 4 and 5, one magnet 4 can be arranged opposite a sensor 5, 6 so that the first magnet is arranged opposite the first sensor and the second magnet is arranged opposite the second sensor. When there is a magnet 4 opposite each sensor 5, 6, all sensors are positioned with the same distance to the magnet, which results in a more precise measurement, again resulting in a better identification of a match of a completion component 33.

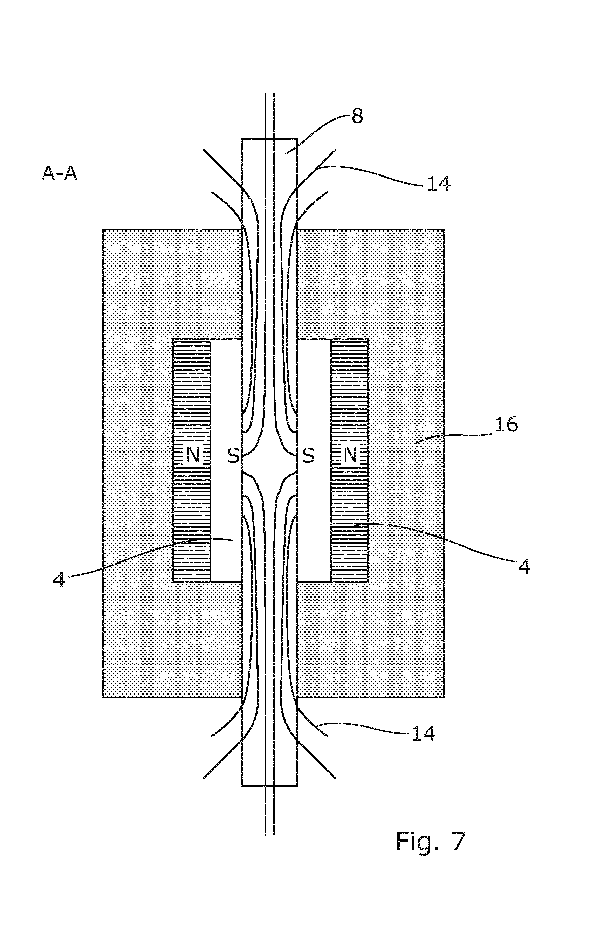

The magnet/magnets 4 can be positioned on a plate 8, such as a circuit board. As it appears in the cross-sectional view of Fig. 7, a magnet 4 may be arranged on the other side of the plate 8 to direct the magnetic field lines along the extension of the plate and thereby in the direction of the sensors 5, 6. In Figs. 3, 4, 5 and 8, the magnet 4 has a cylindrical shape, and as it appears in Fig. 7, repelling poles, such as the south poles of the two opposing magnets, face one another. However, it could also be the north poles.

The magnet 4 is surrounded by a housing 16 of non-magnetic material in order to hold it in place. The non-magnetic material may be any type of substantially non-magnetic material, such as aluminum, porcelain, ceramics, mica, glass, plastics or a combination thereof.

The plate 8 may be any type of plane substance, and it may be made of any suitable non-magnetic material, such as aluminum, porcelain, ceramics, mica, glass, plastics or a combination thereof.

In Fig. 5, magnets 4 are only arranged on one side of the plate 8. Each magnet 4 has a pole facing one sensor 5, 6, and the repelling pole faces the other sensor. In this way, the field lines extend into the sensor 5, 6 without a second magnet 4 on the other side of the plate 8 being required to direct the lines.

The distance between the sensors 5, 6 does not have to be the same, and the distance between the first two sensors in a row of four may therefore be different than the distance between the second and third or the third and fourth sensors.

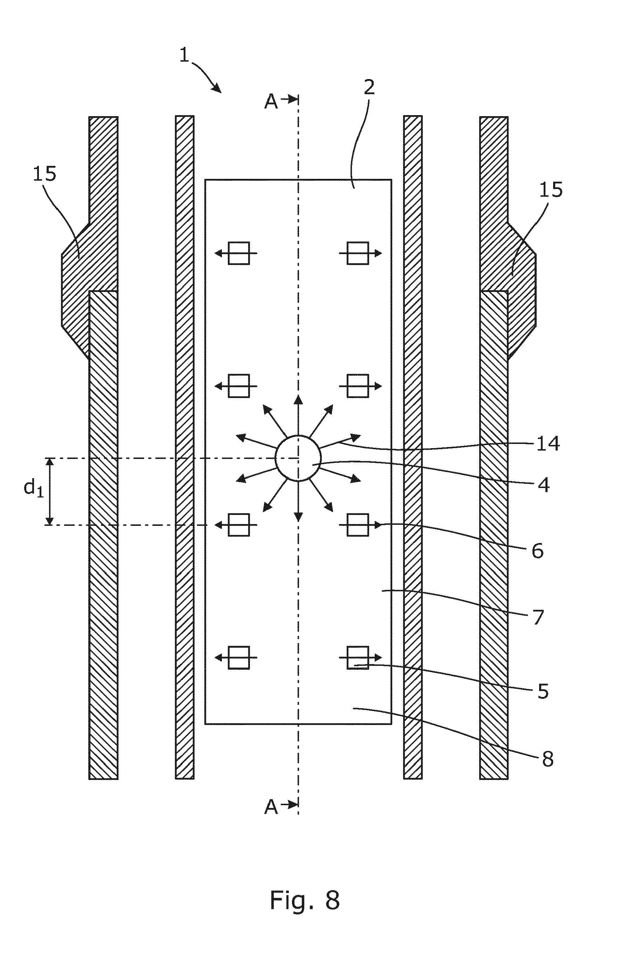

The distance $d_1$ from a sensor to the magnet is the distance from the longitudinal axis of the detecting unit on which the centre of the magnet is arranged as shown in Fig. 8.

As e.g. shown in Figs. 2, 5 and 6, the sensors are arranged in the same position relative to the magnets 4 so that a sensor/two sensors and a magnet are arranged in a pair and so that two adjacent pairs are placed in the same plane, only separated by a distance along the longitudinal axis of the detecting unit 2. This setup is employed to achieve the best quality signals. If the sensors were not placed in the same position relative to their corresponding magnet, the signals obtained from the sensors would be less similar and thereby cause errors and inaccuracies in the results of the processing of the measurements.

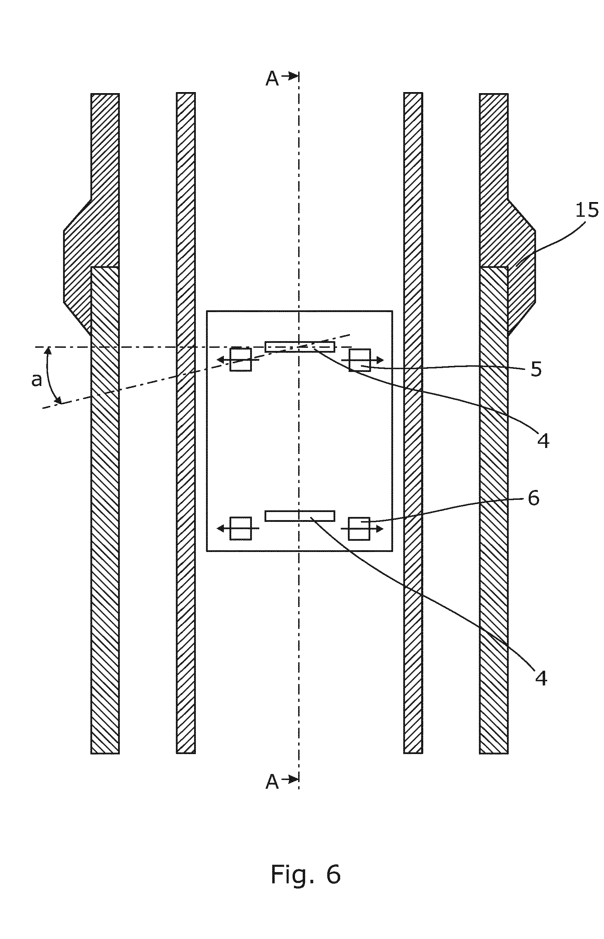

Fig. 6 shows another example of how the sensors might be placed in relation to the magnets while still meeting the criteria for good signal quality described above. The sensors are displaced relative to the corresponding magnet along the longitudinal axis of the tool. As can be seen in Fig. 6 in relation to Fig. 5, the sensors 5, 6 may be arranged at an angle a in relation to the longitudinal extension of the magnet 4. The longitudinal extension of the magnet 4 is transverse to the longitudinal extension of the tool 1. In Fig. 5, the angle a is zero as the sensors 5, 6 are arranged on a centre axis coincident with the longitudinal extension of the magnet 4 and with the magnetic field lines or dipole.

The sensors 5, 6 may be arranged in different positions relative to the magnetic sources, as shown in Figs. 4 and 8. However, as mentioned above, the signals obtained from this setup are less useful for the described method as they will be less similar. This will either cause errors in the results or require complex compensation of the signals prior to their processing.

The sensors 5, 6 detect the direction and/or the magnitude of the magnetic field, and the magnet 4 has a magnetic field source axis substantially transverse to the longitudinal tool axis, as shown in Fig. 6.

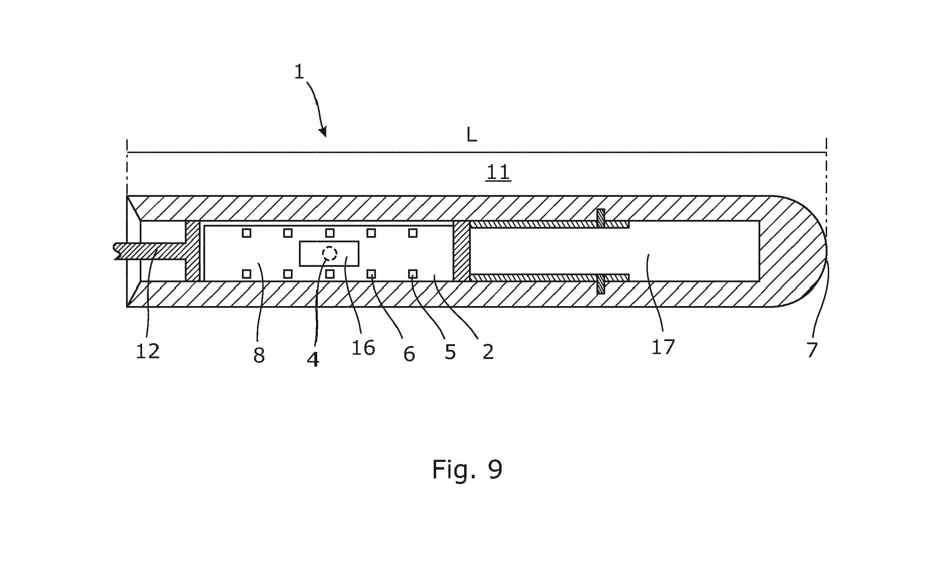

A partly cross-sectional view of the magnetic sensor tool 1 is shown in Fig. 9. The detecting unit 2 is arranged at a distance from the tip 7, which is approximately half the length L of the magnetic sensor tool. There is a space 17 in front of the detecting unit for mounting any other logging or measuring device which can make observations downhole. The detecting unit 2 provides the measurements for the identification of a completion component and/or determining the position of each of the observations made by the tool.

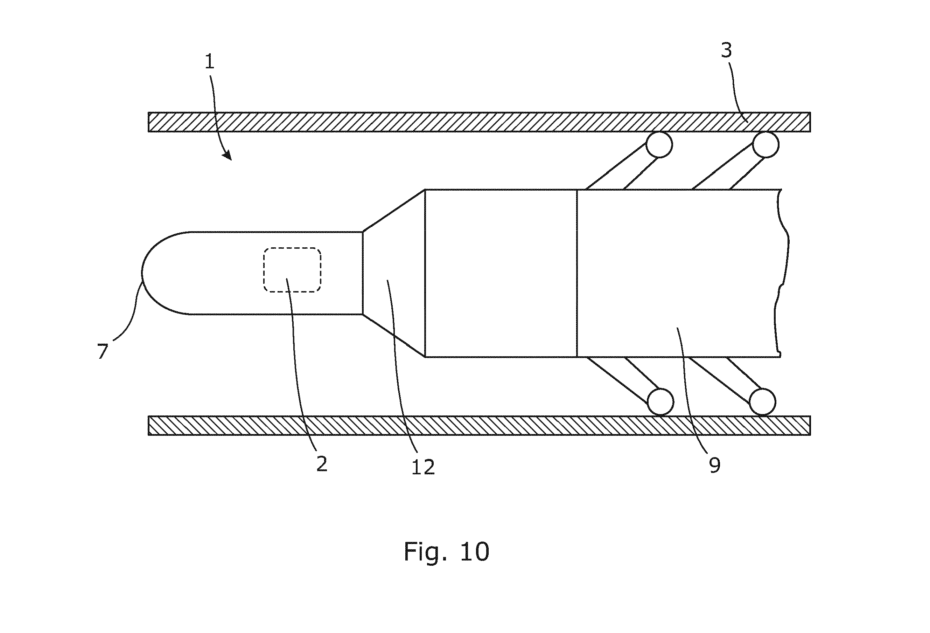

In another embodiment, the detecting unit 2 is positioned elsewhere in the system, as shown in Fig. 10.

Fig. 10 shows a magnetic sensor tool 1 having a tip 7 and a longitudinal extension stretching from the tip towards the driving unit 9. As can be seen, the magnetic sensor tool 1 is surrounded by well fluid, and the detecting unit 2 is situated in the front of the tool. The magnetic sensor tool 1 is connected with the driving unit 9 in a connection joint 12.

In Fig. 8, the magnetic sensor tool 1 comprises a detection unit 2 comprising a magnet 4 and eight sensors 5, 6. These sensors 5, 6 are positioned so that four sensors are positioned on each side of the magnet 4. The sensors 5, 6 are arranged with an axial distance $d_2$ from each other and in the same plane 7 as on a plate 8. The sensors 5, 6 are arranged at a first distance $d_1$ to the magnet 4 which is positioned on the same plate 8. In Fig. 8, the plate 8 is a circuit board.

The magnets 4 may be permanent magnets, electromagnets or any other suitable type of magnets. By using permanent magnets 4, no extra equipment is needed in order for the magnet to function.

The distance between the sensors 5, 6 may vary according to design. In Fig. 12, a graph of the measurements of the same part of the casing made by the two sensors 5, 6 is shown. The horizontal distance between the curves is a measure of the current velocity of the tool 1. As can be seen, the two sensors 5, 6 detect the same changes in the magnetic field when passing the same position.

If the sensors 5, 6 are placed with a long distance between them, the variations in tractor speed may be missed or at least not detected instantaneously. In one embodiment, the distance between the two sensors 5, 6 is between 5 and 150 mm, preferably between 5 and 100 mm, more preferably between 10 and 50 mm, and even more preferably between 10 and 30 mm.

The sensors 5, 6 do not have to be arranged on a flat substance such as a plate 8. They may be positioned in individual plates or clamps as long as they are arranged in substantially the same plane.

The sensors 5, 6 conduct measurements at a sample rate between 1 and 5000 measurements per second, preferably between 100 and 2000 measurements per second and more preferably between 250 and 1000 measurements per second. The calculation of the velocity of the tool 1 is based on between 1 and 300 times per second, preferably between 10 and 100 times per second and more preferably between 10 and 50 times per second.

The magnetic sensor tool 1 may comprise a calculation unit, such as a processor, for calculation of the velocity or the position of the tool.

The invention also relates to a system comprising a magnetic sensor tool 1 as described above and a calculation unit positioned at a distance from the tool, e.g. above surface on an oil rig or vessel. The tool itself may have a calculation unit, meaning that some of the calculations are performed downhole in order to reduce the amount of data transmitted to the calculation unit above surface.

The sensors 5, 6 may be any type of suitable magnetic sensors, such as an anisotropic magnetoresistive sensor capable of measuring the direction of the magnetic field from a magnet 4. By direction sensitive sensor is meant a sensor capable of measuring the direction of the magnetic field surrounding the sensor such as from a magnet nearby. When the tool 1 has an anisotropic magnetoresistive sensor, the determination of the position of the tool is independent of the velocity of the tool. Many types of anisotropic magnetoresistive sensors are very commonly available and therefore inexpensive, without being less reliable.

The choice of magnet type depends on the temperature downhole.

When using several magnets 4 in the same plane, each magnet must have a certain distance to the adjacent magnets to ensure that the casing 3 and the casing collars 15 can influence the direction of the magnetic field generated by the individual magnet. The distance is preferably at least 5mm, more preferably 5-50 mm, and even more preferably 10-30mm.

Thus, the magnetic sensor tool 1 may be used for locating the position of a completion component, such as valve, an annular barrier, a sleeve, a patch, or even a crack or a leak in the casing, or any other feature resulting in a significant change in a magnetic field. Furthermore, the magnetic sensor tool 1 may also be used for determining the position of a tool downhole before performing an operation downhole

Each sensor 5, 6 measures the same changes, but there is a difference in time between the measurements due to the distance between the sensors. The data from the sensors 5, 6 is convoluted, and from the maximum value of the convolution, it can be deduced when a first sensor 5 passes the same position as a second sensor 6, and so forth. The period between the time when the first sensor and the second sensor pass the same positions is termed $\Delta T$, and since the distance $d_2$ between the first sensor 5 and the second sensor 6 is known, it is possible to calculate the velocity of the magnetic sensor tool 1 by means of the following equation:

$$v_{estimate} = \frac{d_2}{\Delta T}$$

The estimate of the velocity is based on a number of measurements, and by continuously calculating the velocity of the tool 1, it is possible to calculate the distance $\Delta x$ travelled since the previous calculation by means of the following equation:

$$\Delta x = v \cdot \Delta t$$

where $\Delta t$ is the time between calculations and $\Delta x$ is the estimated velocity. When adding these estimated distances, the distance from the top of the well at a specific time of e.g. an observation of an irregularity, such as a leak, is known.

Using convolution between datasets received from at least two sensors instead of only comparing the measurements from one sensor with measurements from the other measurement by measurement, the method is relatively insensitive to noise in the measurements. In this way, a more accurate result is obtained. Furthermore, since the same characteristics are present in the two sets, the scale of the data is not important.

When the tool 1 passes a joint or collar where two casing parts are mounted together, the change in field direction is substantially increased. At this point, the distance from a collar is zero, and any errors in the estimated position of the tool can be eliminated. The number of collars passed and the distance from the last collar indicate the actual position of the tool since the distance between collars is known.

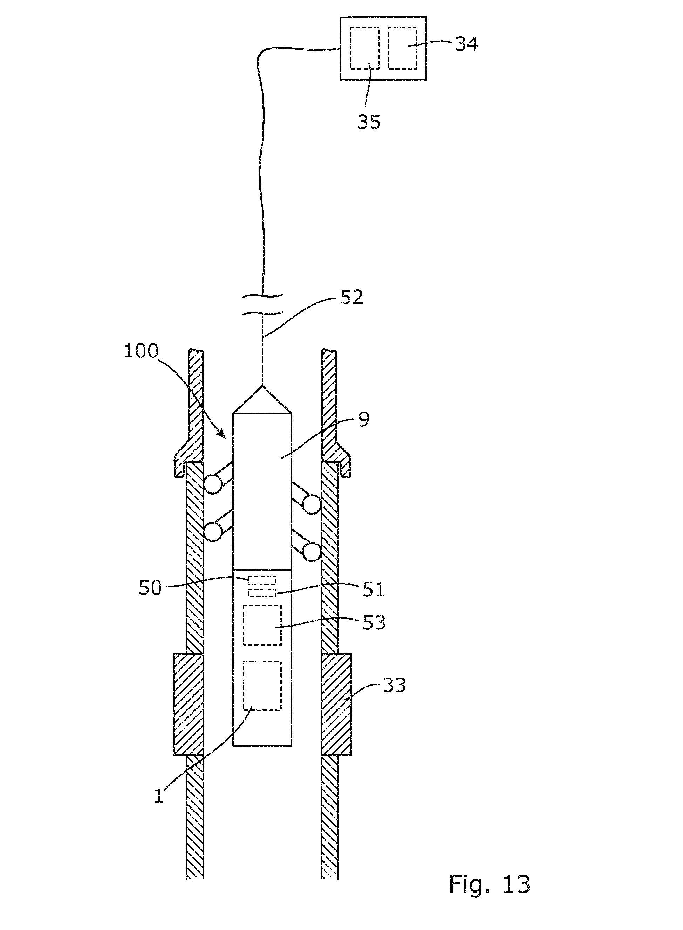

Fig. 13 shows another embodiment of the downhole mapping system 100. In this embodiment, the driving unit 9 and the magnetic sensor tool 1 are powered through a wireline 52. In other embodiments they may be powered by a battery.

In this embodiment, the downhole mapping system 100 comprises the magnetic sensor tool 1, a component scanning unit 53, a communication unit 51 sending information of any matching completion components and a position of the matching completion components to a completion map unit 50, all arranged in the tool operating downhole. The system 100 furthermore comprises the processor 34 and the reference database 35 arranged uphole and being connected with the downhole operational tool via wireline 52.

The reference database 35 may also be arranged at a remote location and be connected to the mapping system 100 for communcation of data. In this situation, the reference database 35 may serve as a reference database for a plurality of mapping systems operating at different locations. The reference database 35 may all be present on a virtual server or be in a cloud, hence being accessible via known wireless communication platforms and communication devices.

The magnetic sensor tool 1 detects the completion components 33 as it moves down through the completion as described above, and the measured set of data is compared with the data of known components in the reference database for identifying a substantially matching component for each of the sections of data having peaks 41 representing a component. By matching component is meant that the measured set of data is substantially identical to 80% of the data of a known component of the reference database, preferably identical to more than 90% of the data of a known component of the reference database.

However, in circumstances in which it is difficult to identify a matching component in the reference database 35, the downhole mapping system 100 may use the component scanning unit 53 for scanning the inner surface for identifying the component 33 and storing the data representing the component 33 in the reference database 35. The scanning unit 53 may use laser for scanning the component 33. Hereby, the unidentified component 33 becomes a known component and the measured set of data and the scanned inner surface of the component may be communicated to the completion map unit 50 and to the reference database 35 for updating the reference database 35 with the new set of data of the component 33 so that this set of data may be used for further comparisons of measured sets of data of other completion components. The data from the scanning unit 53 may have to be reviewed by an operator before the component can be properly identified.

The completion map unit 50 comprises the identified completion components 33 of the specific completion so that the information of different completion components present in the completion is accessible for later operations downhole. In Fig. 13, the completion map unit 50 is arranged in the downhole tool, i.e. in the magnetic sensor tool 1. The completion map unit 50 may then be demounted from the magnetic sensor tool 1 and mounted into an operational tool performing the next operation downhole so that the operational has all data of the completion available to perform the operation on the right component and/or the right position which can be confirmed as the tool moves through the casing by comparing the measured data with the data of the completion map unit 50.

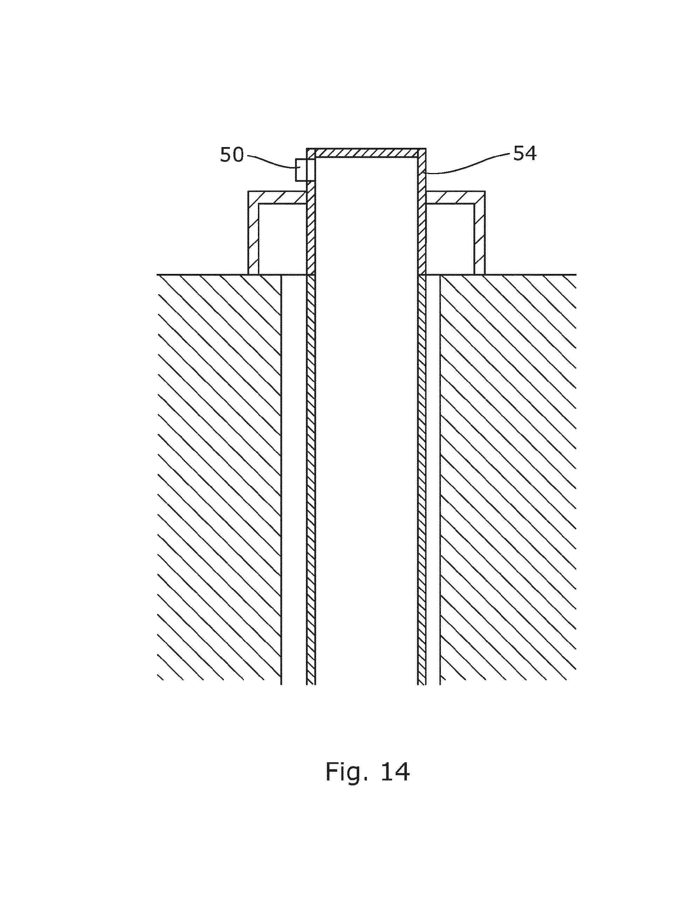

The completion map unit 50 may also be arranged in a first part of the casing nearest to a well head or in the well head 54 as shown in Fig. 14. By arranging the completion map unit 50 in the well head 54 or in the vicinity of the well head, an operational tool may, on its way down the hole, stop at the completion map unit 50 and receive the data of the specific completion as it is about to enter for performing operations downhole. The operational tool will then have all the data it needs, for instance for localising a certain completion component on which it has to perform an operation.

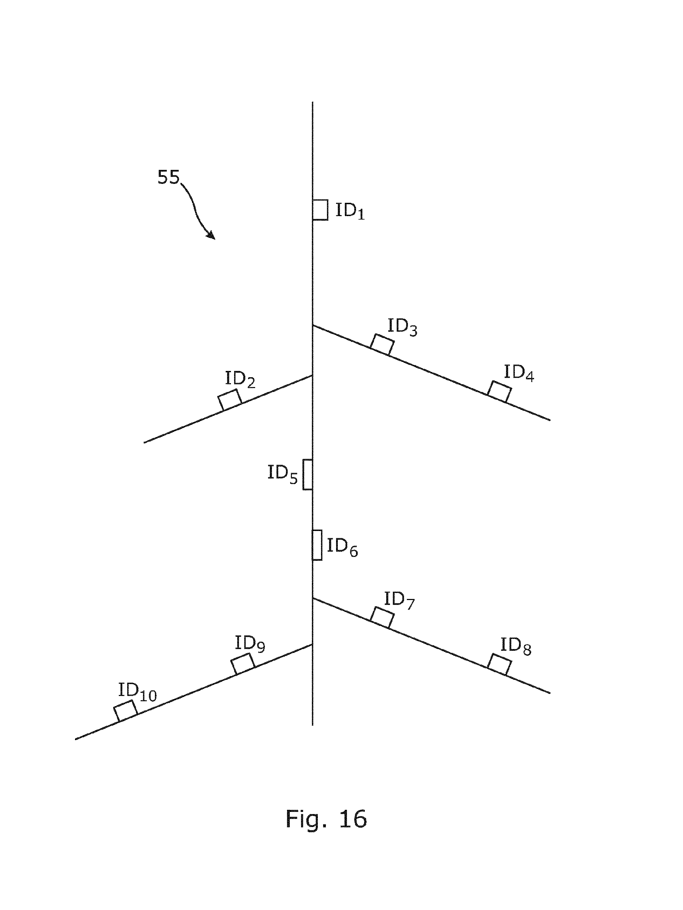

As the downhole mapping system 100 moves downhole and identifies the completion components by comparing the measured set of data with the reference database, it creates a completion diagram 55 of the completion which is being mapped. An example of a completion diagram 55 is shown in Fig. 16.

The completion diagram may be stored on the completion map unit 50. The completion map unit 50 may be a data carrier, wherein the data carrier may be a CD-ROM, a DVD, a Blu-ray, a memory disk or card, a processor, a barcode, a server, or a hard disk, or any combination thereof.

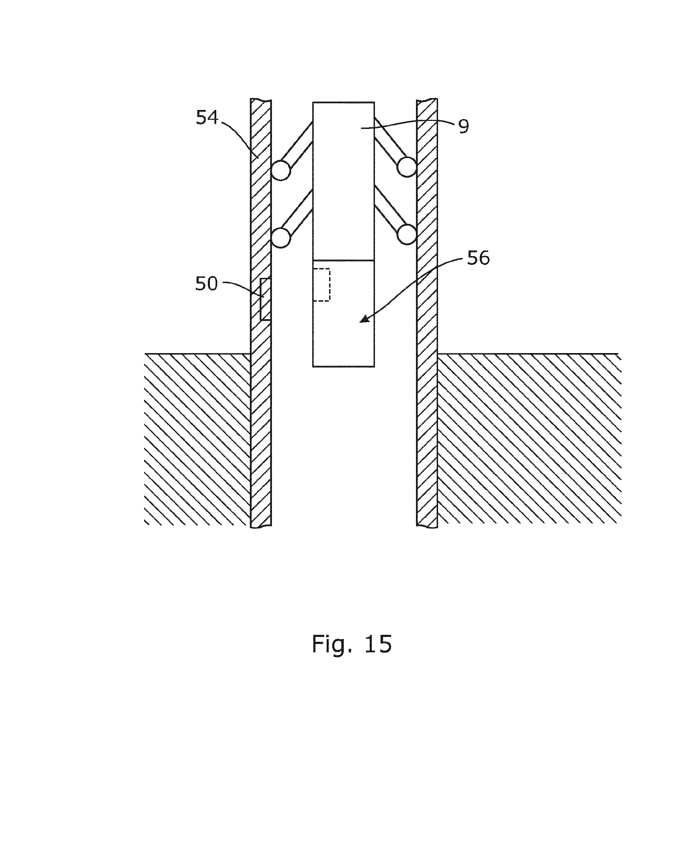

In Fig. 15, the operational tool 56 comprises a reader 57 for reading information from the completion map unit 50 regarding the completion components and a position of the completion components present in the completion it is about to enter. In this embodiment, the completion map unit 50 is arranged in the well head. The operational tool 56 may be a stroker tool, a key tool, a logging tool, a drilling tool, a milling tool, etc.

Even though the operational tool 56 is entering an already mapped completion, it may also comprise the downhole mapping system 100 according to the present invention. Hereby, the mapping system of the operational tool 56 may identify any completion components on its way down into the completion and thereby verify the accuracy of the completion diagram and the accuracy of its own positioning measurements.

In other circumstances in which a completion has not been mapped yet and an operational tool is entering the completion for performing one or more operations, it is an advantage that the operational tool comprises the downhole mapping system, so that a partial or full mapping of the completion may be performed during the operations.

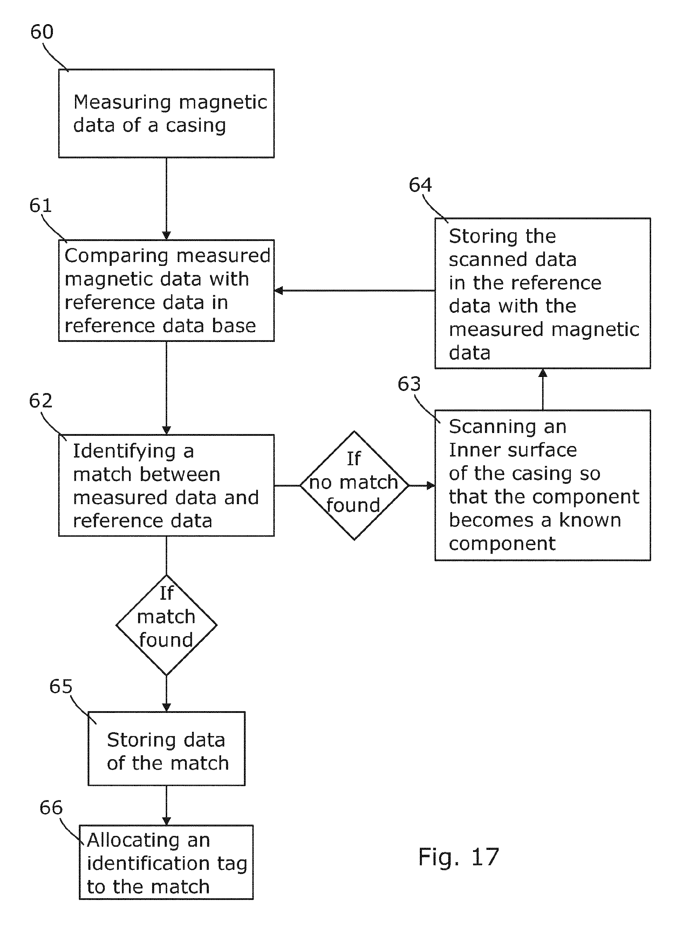

Fig. 17 shows a flowchart of the process of mapping a completion. In the first step 60, the downhole mapping system is measuring magnetic data of a casing. In the second step 61, the measured magnetic data is compared with reference data in a reference database. In the third step 62, a match between the measured data and reference data is identified. In case a match is found, the data of the match is stored together with the position of the match. In the fifth step 66, an identification tag is allocated to the match. In case no match is found, an additional step 63 may be performed. The additional step 63 is scanning an inner surface of the casing so that the component becomes a known component. In a subsequent further step the scanned data is stored in the reference database with the measured magnetic data of the "unknown" component. Then step 62 is performed again and a match is found. In the fourth step 65, the data of the match is stored together with the position of the match. In the fifth step 66, an identification tag is allocated to the match.

For instance, the creation of the reference database 34 may be performed by the suppliers of the completion components delivering the magnetic set of data for each completion component, which data is then stored in the reference database 34, enabling the downhole mapping system 100 to compare the measured set of data with the data present in the reference database for identifying a match. Furthermore, the suppliers of completion components may also deliver scanned images of an inner surface of the completion components, which images are also stored in the reference database. The images may additionally be used for facilitating the procedure of matching completion component data with the data present in the reference database 34. If a certain component is to be located or its presence downhole is to be verified, the component can be scanned at surface and the data stored in the database before the tool enters the well for performing an operation on the component.

Thus, if data from the supplier is not available, the reference database 34 may be improved and enhanced by moving the magnetic sensor tool 1 past a known component for measuring a set of magnetic data representing the known component, and storing the set of measured data with an identification tag of the known component in the reference database 34. The measuring of the known component may occur downhole or uphole.

The reference database may be further improved by scanning the inner surface of the completion component for creating an image of the component. The scanned image is then stored together with the magnetic data of the component in the reference database 34.

By fluid or well fluid is meant any kind of fluid that may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a casing is meant any kind of pipe, tubing, tubular, liner, string etc. used downhole in relation to oil or natural gas production.

As mentioned above, the magnetic sensor tool 1 may be connected with a driving unit 9, such as a downhole tractor, as shown in Fig. 1. In the event that the tools are not submergible all the way into the casing, the downhole tractor can be used to push the tools all the way into position in the well. A downhole tractor is any kind of driving tool capable of pushing or pulling tools in a well downhole, such as a Well Tractor®. The downhole tractor comprises wheels arranged on retractable arms.

Although the invention has been described in the above in connection with preferred embodiments of the invention, it will be evident for a person skilled in the art that several modifications are conceivable without departing from the invention as defined by the following claims.

**Claims**

1. A downhole mapping system (100) for identifying completion components (33) in a casing in a completion, comprising:

- a magnetic sensor tool (1) having a longitudinal tool axis and comprising:

- a detecting unit (2) comprising:

- a first magnet (4) for generating a magnetic field, and
- a first sensor (5) arranged in a first plane (7) and at a first distance ($d_1$) from the first magnet, for detecting changes in the magnetic field,

the sensor (5) detecting changes in the magnitude and/or direction of the magnetic field producing measured data of a profile of the casing, wherein the downhole mapping system further comprises:

- a reference database (34) comprising magnetic reference data of completion components, and
- a processor (35) comparing a set of the measured data with reference data from the database (34) for identifying a substantially matching set of data representing a completion component stored in the reference database.

2. A downhole mapping system (100) according to claim 1, the magnetic sensor tool (1) further comprising a second sensor (6) arranged in the first plane and at a second distance ($d_2$) from the first sensor (5) along the longitudinal tool axis, also for detecting changes in the magnetic field.

3. A downhole mapping system (100) according to claim 1 or 2, further comprising a communication unit (51) sending information of any matching completion components and a position of the matching completion components.

4. A downhole mapping system (100) according to any of the preceding claims, further comprising a component scanning unit (53) for scanning the inner surface for identifying a component and storing the data representing the component in the database, wherein the scanning unit (53) uses laser for scanning the component.

5. A downhole mapping system (100) according to any of the preceding claims, wherein the reference database (34) is arranged in the magnetic sensor tool (1) or at subterrain or uphole.

6. A downhole mapping system (100) according to any of the preceding claims, wherein the processor (35) is arranged in the magnetic sensor tool (1) or at subterrain or uphole.

7. A downhole mapping system (100) according to any of the preceding claims, wherein the downhole mapping system (100) further comprises a completion map unit (50) of identified completion components of the completion.

8. A downhole mapping system (100) according to claim 7, wherein the completion map unit (50) is arranged in a first part of the casing nearest to a well head (54), in the magnetic sensor tool (1) or in the well head (54), and the completion map unit (50) comprises data of the component (33) present in the completion.

9. A downhole mapping system (100) according to claim 7 or 8, wherein the magnetic sensor tool (1) comprises a communication unit (51) sending information of any matching completion components and a position of the matching completion components to the completion map unit (50).

10. A downhole mapping system (100) according to any of the preceding claims, wherein the magnetic sensor tool (1) or another operational tool (56) comprises a reader (57) for reading information from the completion map unit (50) regarding the completion components (33) and a position of the completion components (33) present in the completion.

11. A completion diagram (55) provided by the downhole mapping system (100) according to any of the preceding claims.

12. A data carrier (50) comprising the completion diagram (55) according to claim 11.

13. A method for identifying completion components (33) downhole comprising the steps of:

    - moving the magnetic sensor tool (1) along a casing,
    - measuring a magnetic data of the casing, and
    - comparing the measured magnetic data with reference data in a reference database (34) for identifying a match between the measured data and the reference data.

14. A method according to claim 13, wherein the step of comparing comprises a step of determining a best match where identification of a match is unobtainable.

15. A method according to claim 13 or 14, wherein a component is identified by a component scanning unit (53) scanning an inner surface of the casing, so that the component (33) becomes a known component.

Fig. 1

Fig. 2

Fig. 3

Fig. 4

Fig. 5

Fig. 6

A-A

8

14

16

N S S N

4 4

14

Fig. 7

Fig. 8

EP 2 607 621 A1

Fig. 9

Fig. 10

Fig. 11

Fig. 12

Fig. 13

50

54

Fig. 14

Fig. 15

55

$ID_1$

$ID_3$

$ID_2$

$ID_4$

$ID_5$

$ID_6$

$ID_7$

$ID_9$

$ID_8$

$ID_{10}$

Fig. 16

60

Measuring magnetic
data of a casing

61

Comparing measured
magnetic data with
reference data in
reference data base

64

Storing the
scanned data
in the reference
data with the
measured magnetic
data

62

Identifying a
match between
measured data and
reference data

If
no match
found

63

Scanning an
Inner surface
of the casing so
that the component
becomes a known
component

If
match
found

65

Storing data
of the match

66

Allocating an
identification tag
to the match

Fig. 17

Europäisches
Patentamt

European
Patent Office

Office européen
des brevets

# EUROPEAN SEARCH REPORT

Application Number

EP 11 19 5021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/099250 A1 (BAKER HUGHES INC [US]) 12 December 2002 (2002-12-12) * page 12, lines 3-20; claims 20-23,25; figure 2 * | 1,3,5-15 | INV. E21B47/09 G01B7/02 |
| X | WO 2009/158189 A2 (SCHLUMBERGER CA LTD [CA]; SCHLUMBERGER TECHNOLOGY BV [NL]; PRAD RES &) 30 December 2009 (2009-12-30) * unknown centralisers from comparison with tally database * * figures 1,2,3,4,5a * * the whole document * | 1-3,5-7, 9-15 | |
| X | GB 2 310 042 A (APPLIED TECH ASS [US]) 13 August 1997 (1997-08-13) * figures 4;1-3 * * the whole document * | 13-15 | |
| A | | 1,11 | |
| A | GB 2 374 887 A (SCHLUMBERGER HOLDINGS [VG]) 30 October 2002 (2002-10-30) * claims 33,43 * * the whole document * | 13-15 | |
| A | US 2005/194132 A1 (DUDLEY JAMES H [US] ET AL) 8 September 2005 (2005-09-08) * casing tally with CCL; paragraphs [0035] - [0040]; figure 3B * * the whole document * | 1 | TECHNICAL FIELDS SEARCHED (IPC) E21B G01B |
| A | EP 2 317 071 A1 (WELLTEC AS [DK]) 4 May 2011 (2011-05-04) * the whole document * | 1,11,13 | |
| A | EP 2 317 070 A1 (WELLTEC AS [DK]) 4 May 2011 (2011-05-04) * the whole document * | 1-15 | |

The present search report has been drawn up for all claims

| Place of search | Date of completion of the search | Examiner |
|---|---|---|
| The Hague | 3 May 2012 | van Berlo, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 19 5021

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2012

| Patent document cited in search report | | Publication date | Patent family member(s) | | Publication date |
|---|---|---|---|---|---|
| WO 02099250 | A1 | 12-12-2002 | CA | 2448895 A1 | 12-12-2002 |
| | | | GB | 2393201 A | 24-03-2004 |
| | | | WO | 02099250 A1 | 12-12-2002 |
| WO 2009158189 | A2 | 30-12-2009 | EP | 2310628 A2 | 20-04-2011 |
| | | | US | 2011204896 A1 | 25-08-2011 |
| | | | WO | 2009158189 A2 | 30-12-2009 |
| GB 2310042 | A | 13-08-1997 | CA | 2194854 A1 | 06-08-1997 |
| | | | GB | 2310042 A | 13-08-1997 |
| | | | US | 5720345 A | 24-02-1998 |
| GB 2374887 | A | 30-10-2002 | GB | 2374887 A | 30-10-2002 |
| | | | NO | 20021985 A | 28-10-2002 |
| | | | SG | 104318 A1 | 21-06-2004 |
| | | | US | 2002185275 A1 | 12-12-2002 |
| US 2005194132 | A1 | 08-09-2005 | US | 2005194132 A1 | 08-09-2005 |
| | | | WO | 2005091900 A2 | 06-10-2005 |
| EP 2317071 | A1 | 04-05-2011 | CA | 2773272 A1 | 05-05-2011 |
| | | | EP | 2317071 A1 | 04-05-2011 |
| | | | WO | 2011051429 A1 | 05-05-2011 |
| EP 2317070 | A1 | 04-05-2011 | EP | 2317070 A1 | 04-05-2011 |
| | | | WO | 2011051435 A2 | 05-05-2011 |

EPO FORM P0459

For more details about this annex : see Official Journal of the European Patent Office, No. 12/82